# DEMANDE DE BREVET EUROPEEN

(11) **EP 2 368 517 A1**
(43) Date de publication de la demande: **28.09.2011**
(21) Numéro de dépôt: 09012387.8
(22) Date de dépôt: 26.03.2010
(51) Int. Cl.: A61C 5/02

(54) **Dispositif médical de préparation et de mise en forme canalaire**

(71) Demandeur: Oiknine, Michel, 71210 Montchanin (FR); Benzineb, Tarak, 54180 Houdemont (FR); Machtou, Pierre, 75006 Paris (FR)
(72) Inventeur: Oiknine, Michel, 71210 Montchanin (FR); Benzineb, Tarak, 54180 Houdemont (FR); Machtou, Pierre, 75006 Paris (FR)

(57) **Abrégé**

La présente invention concerne un nouveau dispositif médical en alliage à mémoire de forme se présentant sous la forme d'un foret flexible avec un axe de rotation décalé par rapport à l'axe support de ce dit dispositif permettant de forer et nettoyer le canal dentaire en une ou 2 opérations mécaniques, tout en limitant le risque de cassure.

## Description

La présente invention se rapporte a un dispositif de préparation et de mise en forme de la cavité endodontique d'une dent, comprenant au moins un instrument abrasif endocanalaire, solidarisé d'une tête d'entraînement.

Pour bien comprendre l'invention il faut rappeler quelques notions dentaires. La dent est composée d'une couronne et d'une racine. L'émail recouvre la couronne visible dans la cavité buccale, c'est le premier tissu altéré par la carie.

La racine assure le maintien dans l'os, par l'intermédiaire d'un ligament. La majorité de sa constitution est de la dentine ou ivoire, tissus moins dur que l'émail et sous jacent à ce dernier. C'est donc le deuxième tissu altéré par la carie.

Au centre de ce deuxième tissu se trouve un tissu, reste embryologique du tissu formateur de la dent, la pulpe dentaire. C'est dans ce tissu que se situe le paquet vasculo-nerveux de la dent. C'est ce troisième tissu qui est altéré par la carie.

La pulpe dentaire envahit par les germes bactériens est le siège d'une intense inflammation. Cela déclenche une augmentation du volume sanguin dans la dent et comprime les fibres nerveuses. La dent est sensible spontanément, c'est la pulpite aiguë qui oblige au retrait de la pulpe.

Le geste thérapeutique consiste donc à désinfecter l'espace endodontique qui contenait la pulpe. Il est alors nécessaire de procéder à l'exploration et au traitement de cet espace. Ce geste thérapeutique est appelé dévitalisation et revêt donc un aspect chirurgical plus marqué lorsqu'il s'agit d'une nécrose.

La présente invention s'attache à réaliser ce traitement avec plus d'efficacité, plus d'aisance, et moins de moyens mis en oeuvre.

La présente invention concerne donc un dispositif de dévitalisation de la cavité endodontique d'une dent comprenant au moins un instrument abrasif endocanalaire, solidarisé d'une tête d'entraînement rotative mue par tous moyens connus.

Une étude a montré que prés de 85% des dents traitées en endodontie ne sont pas fiables. Canal dentaire mal nettoyé, résidu de traitement, mauvaises obturations.

De plus nettoyer un canal représente aujourd'hui un alésage mécanique avec des instruments de section cylindrique aux dépens d'une cavité le plus souvent de section ovale, qui n'est donc que partiellement instrumentée.

On identifie plusieurs phases qui se superposent et s'entrecroisent, dans le traitement canalaire :
- Ouverture de la chambre pulpaire
- Extraction du contenu.
- Parage du canal
- Mise en forme canalaire par alésage:
   utilisation de limes d'un diamètre croissant.
- Obturation
La présente invention a pour but de réduire le nombre des instruments nécessaires pour traiter le canal dentaire.

Les Techniques de mise en forme canalaire à titre thérapeutique, sont largement encore utilisées par de nombreux praticiens à travers les différents continents et emploient des limes en acier appelés limes K ou broches H en alternances sous une irrigation hypochlorite de sodium à 2%.

Le nettoyage du système canalaire, obligatoire pour obtenir une guérison à long terme nécessite la réalisation d'une préparation conique, homogène, qui respecte l'anatomie et le trajet canalaire du sommet coronaire au foramen apicale limite extrême du canal dentaire, une obturation tridimensionnelle étanche vient assurer la pérennité de la préparation et du traitement.

Pour répondre à ces impératifs mécanique et biologique, la conicité recherchée est au minimum de 6% à partir du foramen apical, le diamètre le l'extrémité apicale doit être eu minimum de 20/100.

Les techniques manuelles faisant appel aux limes en acier inoxydable à 2% de conicité utilisent 8 limes K allant de 08 : 100 au 40/100 (diamètre de pointe) en alternance avec autant de broches.

Inconvénients de cette méthode :
- le nombre d'instruments
- la gestion de ces instruments pour la stérilisation
- le manque de conicité
- la rigidité des alliages qui interdit toute augmentation de la conicité
- le temps nécessaire pour obtenir une préparation adéquate
- Le coût du traitement inadapté
Résultats : Certaines études montrent que 60% des traitements canalaires réalisées montrent des signes cliniques et radiologiques d'échec nécessitant soit un retraitement soit la perte de l'organe dentaire

Depuis 7 à 8 ans de nombreux chercheurs se sont intéressés à de nouvelles techniques de préparation mécanisées, utilisant pour les instruments dentaires (limes endocanalaire) un alliage à mémoire de forme le nickel-titane équi-atomiques, cet alliage présente une propriété extraordinaire qui la super élasticité.

Cette qualité est liée à une transformation cristallographique réversible appelée transformation martensitique sous l'effet d'une force ou de la température. Ceci à permis la réalisation par usinage de lime de 6% voir de 8% de conicité tout en conservant la flexibilité suffisant au respect des courbures et du trajet canalaire

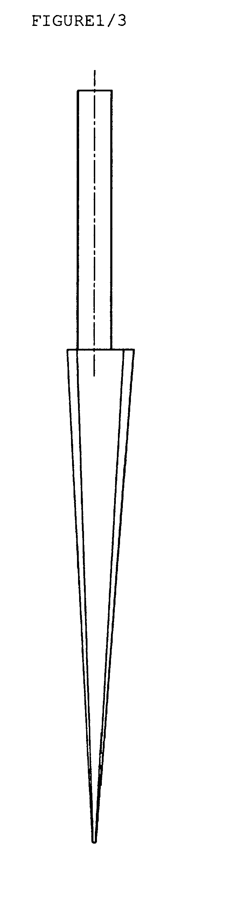

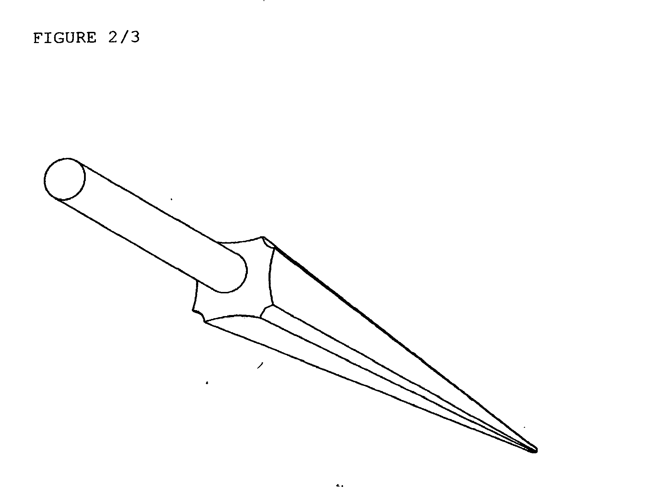

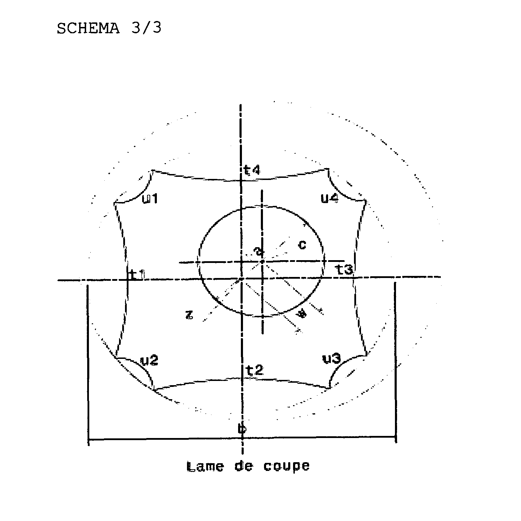

Ces instruments sont efficaces avec un moteur de rotation continue qui tourne entre 300 et 400T/mn et présente les avantages suivants :
- Plus grand respect de la trajectoire canalaire
   - gain de temps
   - On utilise une séquence de 6 instruments
   - Obtention rapide et suffisante des
   - Préparations permettant un nettoyage et une
   - obturation d'excellente qualité
      - -Résultats thérapeutiques très nettement améliorés puisqu'on parle pour un praticien performant de 85 à 90% de réussite
      - Cout moindre car moins de retraitement
Cependant, si les avantages sont nombreux, il existe également de nombreux inconvénients
- Technique délicate à maîtrisée
- coût des instruments élevés
- fragilité des instruments, risque important de fracture lors de la préparation liée entre autre à un effet de vissage, ceci est du au dessin de l'instrument et à l'utilisation d'un mouvement mécanisé rotatif
- instruments impossibles à stériliser complètement donc risque de contamination croisée
- utilisation d'une séquence de 6 instruments
- Temps de gestion des séquences importants (stocks, rangement...etc. )

La présente invention a pour but de réaliser le traitement du canal dentaire avec un nombre de limes limité et avec un géométrie particulière évitant la cassure de l'instrument.

A cet effet, elle concerne un dispositif de dévitalisation de la cavité endodontique d'une dent comprenant au moins un instrument abrasif endocanalaire, solidarisé d'une tête cylindrique dont l'axe est décalé par rapport à ce même instrument abrasif. Cet instrument peu être entrainé par un moteur rotatif continue ou de préférence alternatif. L'ensemble est constitué par une base susceptible d'être entraînée en rotation par une tête d'entraînement autour d'un axe de référence, sous laquelle s'étend librement une partie travaillante filiforme tronconique et souple en métal à mémoire de forme, dont l'axe est décalé par rapport **à** l'axe de référence, selon le schéma 1 présenté en annexe.

On distingue ainsi une partie cylindrique de diamètre a s'étendant sur une distance e dont la longueur peut est variable entre 5 et 60 mn et une deuxième partie conique dont la longueur est représenté par **f** et dont la longueur peut être variable entre 10 et 50 mn mais préférentiellement entre 15 et 30 mn.La partie f part d'une base b à une pointe h et dont la décroissante s'effectue sur une pente constante de 3 à 8% mais préférentiellement de 6%.La partie cylindrique Y à un axe c décalé de l'axe d de la partie conique de 1 à 5 mn.

Le schéma 2 montre que l'axe du cylindre a est décalé en avant et latéralement par rapport à l'axe de révolution z du cône z. Cette partie conique comprend 4 grandes échancrures notée de t1 à T4 et chaque grande échancrure est bordée par de 4 petites échancrures notées d'U1 à U4.

### Le rapport de dimension entre les échancrures T et U est compris dans un rapport de 1 à 4 et la profondeur dans un rapport de 1 à 3.

La conformation particulière de ces échancrures qui parcourt le cercle de révolution Z va permettre d'une part l'attaque du tissu muqueux du canal dentaire et d'autre part vont permettre l'évacuation des tissus.

Le décalage des axes C et Z va permettre à la partie Z souple de parcourir un axe de révolution b de manière décentré et donc de parcourir l'ensemble du canal dentaire. Les axes C et Z sont décentrées l'un par rapport à l'autre par une distance W qui peut varier de 1 à 5 mn mais préférentiellement de X mn. Ce décentrement est à la fois latéral et en avant. C'est la conformation particulière de ce décentrage qui confère à l'outil un parcours idéal dans le canal dentaire.

Les essais fait avec les prototypes démontre l'efficacité surprenante de cette configuration. Alors qu'avec les outils traditionnels et dans des mains expérimentés, la réussite est de 85%, elle est de près de 100% avec cette nouvelle technique.

## Revendications

1. Dispositif de préparation de la cavité endodontique d'une dent comprenant au moins un instrument endocanalaire, composé d'une partie active muni de lames de coupe et d'un manche qui s'adapte sur la tête d'une pièce à main permettant un mouvement mécanisé rotatif ou alternatif.

2. Dispositif de préparation de la cavité endodontique selon la revendication 1, qui comprends un instrument endocanalaire, constitué par une base cylindrique susceptible d'être entraînée en rotation par une tête d'entraînement autour d'un axe de référence (a)

3. Dispositif de préparation de la cavité endodontique selon la revendication a base 1 à 2 comprenant une base (b) **à** partir de laquelle s'étend librement une partie conique Z filiforme et souple, dont l'axe (d) est décalé latéralement et en avant par rapport **à** l'axe de référence (c) déplaçant ainsi l'axe central.

4. Dispositif de préparation de la cavité endodontique selon la revendication 1 à 3 selon laquelle l'axe est décalé de manière à déterminé un angle alpha de 0,5 à 5°par rapport à l'axe classique de l'instrument, obligeant la lime lors de sa mise en rotation à déterminer un cône respectant l'anatomie canalaire.

5. Dispositif de préparation de la cavité endodontique selon la revendication 1 à 4 selon laquelle le cône descendant est dans un rapport de conicité descendante idéalement compris entre 4 et 8°. Lorsque la partie f tourne, elle engendre un volume qui est capable de s'auto-adapter à une cavité de volume tronconique diminuant le risque de fracture de l'instrument.

6. Dispositif selon la revendication 1 à 5 et qui comporte 4 grandes échancrures notées de t1 à t4 disposées de part et d'autre du cône et entre lesquels se trouve des échancrures de dimension réduite en nombre identique notées de u1 à u4.

7. Dispositif selon la revendication 6 selon laquelle chacune de ces petites échancrures u1 à u4 comporte 2 lames qui sont actives en rotation alternative droite puis gauche.

8. Dispositif selon la revendication 6 et 7 selon lesquelles les petites échancrures se trouvent idéalement dans un rapport de 1 à 4 en termes de dimension par rapport aux 4 grandes échancrures T dont le rôle est l'évacuation des dentinaires, sans risque de blocage.

9. Dispositif selon les revendications 6 à 8 selon lesquelles les petites échancrures sont disposées à chaque angle de la partie tronconique et dont la révolution reste confinée dans l'axe de révolution b.

10. Dispositif selon les revendications 6 à 9 selon lesquelles les petites échancrures U1 à U4 définissent chacune à leurs 2 extrémités une lame de coupe active dans le sens droite puis gauche au cours d'un mouvement alternatif.

11. Dispositif selon les revendications 6 à 10 selon lesquelles la profondeur des petites échancrures U1 et U4 par rapport aux échancrures T1àT4 s'établit dans un rapport de 1à3.

12. Dispositif selon les revendications 1 à 10 ou les échancrures T1àT4 ainsi que U1 àU4 sont centré par rapport à l'axe d, axe dit central de la lime.

13. Dispositif selon les revendications 1 à 11 et dont la partie tronconique z est constituée d'un alliage à mémoire de forme le nickel-titane ou de tout autre alliage à mémoire de forme.
